# EUROPEAN PATENT APPLICATION

(11) **EP 4 109 600 A1**
(43) Date of publication of application: **28.12.2022**
(21) Application number: 21756196.8
(22) Date of filing: 08.02.2021
(51) Int. Cl.: H01M 4/62, H01M 10/052, H01M 10/0562, H01B 1/06, H01B 13/00

(54) **ION CONDUCTOR CONTAINING HIGH-TEMPERATURE PHASE OF LICB9H10 AND METHOD FOR PRODUCING SAME**

(30) Priority: 17.02.2020 JP 2020024326
(71) Applicant: MITSUBISHI GAS CHEMICAL COMPANY, INC., Chiyoda-ku Tokyo 100-8324 (JP); Tohoku Techno Arch Co., Ltd., Sendai-shi, Miyagi 980-0845 (JP)
(72) Inventor: NOGUCHI, Keita, Niigata-shi, Niigata 950-3112 (JP); NOGAMI, Genki, Niigata-shi, Niigata 950-3112 (JP); MATSUURA, Yutaka, Niigata-shi, Niigata 950-3112 (JP); KIM, Sangryun, Sendai-shi, Miyagi 980-8577 (JP); KISU, Kazuaki, Sendai-shi, Miyagi 980-8577 (JP); ORIMO, Shin-ichi, Sendai-shi, Miyagi 980-8577 (JP)
(74) Representative: Vossius & Partner Patentanwälte Rechtsanwälte mbB
(86) International application number: PCT/JP2021/004511
(87) International publication number: WO 2021/166705

(57) **Abstract**

The present invention is capable of providing a method for producing an ion conductor containing LiCB₉H₁₀ and LiCB₁₁H₁₂, said method being characterized by comprising: a solution formation step wherein a homogeneous solution is prepared by mixing LiCB₉H₁₀ and LiCB₁₁H₁₂ in a solvent at a LiCB₉H₁₀/LiCB₁₁H₁₂ molar ratio of from 1.1 to 20; a drying step wherein a precursor is obtained by removing the solvent from the homogeneous solution; and a heat treatment step wherein an ion conductor is obtained by subjecting the precursor to a heat treatment.

## Description

### TECHNICAL FIELD

The present invention relates to an ion conductor containing a high-temperature phase of LiCB₉H₁₀ and a method for producing the same.

### BACKGROUND ART

Recently, a demand for lithium ion secondary batteries has been increased in applications including portable information terminals, portable electronic equipments, electric vehicles, hybrid electric vehicles and stationary power storage systems. However, currently, a flammable organic solvent is used as an electrolytic solution in lithium ion secondary batteries, and a strong exterior is required so that an organic solvent does not leak out. Further, for example, in the case of portable personal computers, it is necessary to employ a structure against a risk at the time when an electrolytic solution leaks out. Thus, there is a limitation on structures of devices.

Moreover, the range of applications thereof has been widened to movable bodies such as vehicles and aircrafts, and a high capacity is desired for stationary lithium ion secondary batteries. Under such circumstances, importance tends to be placed on safety more than before, and efforts are concentrated on the development of an all-solid-state lithium ion secondary battery in which none of toxic substances such as organic solvents is used.

For example, use of an oxide, phosphate compound, organic polymer, sulfide, complex hydride or the like as a solid electrolyte in an all-solid-state lithium ion secondary battery has been examined.

All-solid-state batteries are broadly classified into the thin film type and the bulk type. In the case of the thin film type, interface bonding is ideally formed by utilizing gas phase film formation, but the electrode layer is thin (several µm), the electrode area is small, the amount of energy which can be stored per cell is small, and the cost is high. Therefore, it is inappropriate as a battery for large electrical storage devices or electric vehicles, wherein a large amount of energy must be stored. Meanwhile, in the case of the bulk type, the thickness of the electrode layer can be adjusted to be several tens µm to 100 µm, and it is possible to prepare an all-solid-state battery having a high energy density.

Among solid electrolytes, a sulfide and a complex hydride have characteristics that they have high ion conductivity and are relatively soft, and that therefore it is easy to form the interface between solids. For this reason, applications thereof to bulk type all-solid-state batteries have been examined (Patent Documents 1 and 2).

However, conventional sulfide solid electrolytes have characteristics that they react with water, and there are problems that a sulfide generates hydrogen sulfide, and that after they react with water, the ion conductivity is reduced. Meanwhile, complex hydride solid electrolytes tend to have ion conductivity that is slightly lower than that of sulfide solid electrolytes, and it is desired to improve the ion conductivity.

Non-Patent Document 1 describes a solid electrolyte having high ion conductivity called "carborane-based" (6.7 mS/cm, 25°C), and a mechanical milling method is used in this case. The mechanical milling method has a problem with respect to mass production, and a mass synthesis method using a solution is desired. Meanwhile, Non-Patent Document 2 discloses a method for producing an all-solid-state battery excellent in productivity, wherein a solid electrolyte solution in which a boron hydride compound as a solid electrolyte is dissolved is applied to a surface of a positive electrode layer and a surface of a negative electrode layer to be faced to each other in an electrode, and then a solvent is removed and the surfaces are bonded together, followed by giving a low pressing pressure.

In Non-Patent Document 3, a solid electrolyte having high ion conductivity called "carborane-based" (5 mS/cm at 35°C) was synthesized using a water solvent, but it comprises not only a high-temperature phase of LiCB₉H₁₀, but also a diploid phase of LiCB₉H₁₀ and LiCB₁₁H₁₂. Further, it is desired to further improve ion conductivity.

### PRIOR ART DOCUMENTS

### PATENT DOCUMENTS

Patent Document 1: Japanese Patent No. 6246816
Patent Document 2: WO2017/126416

### NON-PATENT DOCUMENTS

Non-Patent Document 1: Nature Communications volume 10, Article number: 1081 (2019)
Non-Patent Document 2: 59th Battery Symposium in Japan, 3BO4 Development of all-solid-state lithium battery using hydride-based solid electrolyte and battery characteristics thereof
Non-Patent Document 3: ACS Energy Lett. 2016, 1, 659-664

### SUMMARY OF THE INVENTION

### PROBLEMS TO BE SOLVED BY THE INVENTION

The objective of the present invention is to provide an ion conductor excellent in various characteristics including ion conductivity and a method for producing the same.

### MEANS FOR SOLVING THE PROBLEMS

The present inventors diligently made researches in order to solve the above-described problems, and found that the problems can be solved by an ion conductor obtained by using a homogenous solution prepared by mixing LiCB₉H₁₀ and LiCB₁₁H₁₂ with each other in a solvent at a specific molar ratio. Specifically, the present invention is as described below.
<1> A method for producing an ion conductor containing LiCB₉H₁₀ and LiCB₁₁H₁₂, the method including:
   a solution making step for mixing LiCB₉H₁₀ and LiCB₁₁H₁₂ with each other in a solvent at a LiCB₉H₁₀/LiCB₁₁H₁₂ molar ratio of from 1.1 to 20 to prepare a homogeneous solution;
   a drying step for removing the solvent from the homogeneous solution to obtain a precursor; and
   a heat treatment step for heat-treating the precursor to obtain an ion conductor.
<2> The method according to item <1>, wherein the solvent in the solution making step is at least one selected from the group consisting of water, tetrahydrofuran, acetonitrile, acetone, ethyl acetate, methyl acetate, toluene, methylene chloride and chloroform.
<3> The method according to item <1>, wherein the solvent in the solution making step consists of water.
<4> The method according to any one of items <1> to <3>, wherein the stirring and mixing time in the solution making step is 5 minutes to 48 hours.
<5> The method according to any one of items <1> to <4>, wherein the molar ratio between LiCB₉H₁₀ and LiCB₁₁H₁₂ (LiCB₉H₁₀/LiCB₁₁H₁₂) in the solution making step is from 1.5 to 9.
<6> The method according to any one of items <1> to <5>, wherein the temperature in the drying step is 50 to 260°C.
<7> The method according to any one of items <1> to <6>, wherein the drying time in the drying step is 1 to 24 hours.
<8> The method according to any one of items <1> to <7>, wherein the temperature in the heat treatment step is 150 to 260°C.
<9> The method according to any one of items <1> to <8>, wherein the heating time in the heat treatment step is 1 to 24 hours.
<10> The method according to any one of items <1> to <9>, wherein the obtained ion conductor has a single-phase crystal structure of a high-temperature phase of LiCB₉H₁₀.
<11> The method according to any one of items <1> to <10>, wherein the obtained ion conductor has X-ray diffraction peaks at at least 2θ=14.9±0.3 deg, 16.4±0.3 deg and 17.1±0.5 deg in X-ray diffraction at 25°C, and wherein the intensity ratio (B/A) calculated according to A=(X-ray diffraction intensity of 16.4±0.3 deg)-(X-ray diffraction intensity of 20 deg) and B=(X-ray diffraction intensity of 17.1±0.5 deg)-(X-ray diffraction intensity of 20 deg) is 1.0 to 20.
<12> The method according to any one of items <1> to <11>, wherein the obtained ion conductor has an ion conductivity of 1.0 to 10 mScm⁻¹ at 25°C.
<13> An ion conductor obtained by the method according to any one of items <1> to <12>.
<14> An electrode obtained by using the ion conductor according to item <13>.
<15> An all-solid-state battery obtained by using the ion conductor according to item <13>.

### ADVANTAGEOUS EFFECT OF THE INVENTION

According to the present invention, it is possible to provide an ion conductor excellent in various characteristics including ion conductivity and a method for producing the same.

### BRIEF DESCRIPTION OF THE DRAWINGS

FIG. 1 shows X-ray diffraction peaks of powder of the ion conductor obtained in Example 1.
FIG. 2 shows the Raman spectrum of the ion conductor obtained in Example 1.
FIG. 3 shows results of the measurement of ion conductivity of the ion conductor obtained in Example 1.
FIG. 4 shows measurement results of differential thermal analysis (DTA) obtained in Example 1.

### EMBODIMENTS FOR CARRYING OUT THE INVENTION

Hereinafter, embodiments of the present invention will be described. Note that materials, constitutions, etc. described below do not limit the present invention and can be modified variously within the range of the gist of the present invention.

### 1. Ion conductor

According to one embodiment of the present invention, an ion conductor containing lithium (Li), carbon (C), boron (B) and hydrogen (H) is provided. In the embodiment, preferably, the ion conductor contains a high-temperature phase of LiCB₉H₁₀ (phase having high ion conductivity) as a crystal, and more preferably, the ion conductor contains a high-temperature phase of LiCB₉H₁₀ (phase having high ion conductivity) as a crystal and is composed of LiCB₉H₁₀ and LiCB₁₁H₁₂.

In Raman spectroscopy, the ion conductor of the present invention preferably has peaks respectively at 749 cm⁻¹ (±5 cm⁻¹) that is based on LiCB₉H₁₀ and 763 cm⁻¹ (±5 cm⁻¹) that is based on LiCB₁₁H₁₂. The ion conductor may have peaks in other regions, but peaks showing the respective characteristics thereof are as described above.

The ion conductor of the present invention preferably contains a high-temperature phase of LiCB₉H₁₀ as a crystal. LiCB₉H₁₀ has a high-temperature phase and a low-temperature phase, which depend on the crystal condition thereof. A high-temperature phase at a high temperature (e.g., about 75 to 150°C) has high ion conductivity, but at near room temperature (e.g., about 20 to 65°C), it becomes a low-temperature phase and ion conductivity is reduced.

The ion conductor of the present invention preferably has X-ray diffraction peaks based on the high-temperature phase of LiCB₉H₁₀ at at least 2θ=14.9±0.3 deg, 16.4±0.3 deg and 17.1±0.5 deg in X-ray diffraction at 25°C. More preferably, the intensity ratio (B/A) calculated according to A=(X-ray diffraction intensity of 16.4±0.3 deg)-(X-ray diffraction intensity of 20 deg) and B=(X-ray diffraction intensity of 17.1±0.5 deg)-(X-ray diffraction intensity of 20 deg) is 1.0 to 20, and it is even more preferably 1.0 to 15, and particularly preferably 1.0 to 10. When the intensity ratio (B/A) is 1.0 to 20, the phase transition temperature is reduced by solid-soluting LiCB₁₁H₁₂ in the high-temperature phase of LiCB₉H₁₀, and a state where high ion conductivity is provided can be kept even at near room temperature. This solid-soluting works out when the LiCB₉H₁₀/LiCB₁₁H₁₂ molar ratio is 1.1 or more. LiCB₉H₁₀/LiCB₁₁H₁₂ is preferably 1.1 to 20, more preferably 1.25 to 10, and particularly preferably 1.5 to 9. In the above-described range, the value of ion conductivity is high.

Note that even when the ion conductor of the present invention includes X-ray diffraction peaks other than the above-described ones, desired effects are obtained.

Further, the ion conductor of the present invention may contain components other than lithium (Li), carbon (C), boron (B) and hydrogen (H). Examples of the other components include oxygen (O), nitrogen (N), sulfur (S), fluorine (F), chlorine (Cl), bromine (Br), iodine (I), silicon (Si), germanium (Ge), phosphorus (P), an alkali metal and an alkaline earth metal.

The above-described ion conductor is soft and can be formed into an electrode layer and a solid electrolyte layer by means of cold pressing. Further, the electrode layer and solid electrolyte layer thus formed are more excellent in strength when compared to cases where a sulfide solid electrolyte or an oxide solid electrolyte is contained in a large amount. Accordingly, by using the ion conductor of the present invention, an electrode layer and a solid electrolyte layer which have excellent formability and are not easily broken (cracking does not easily occur) can be prepared. Moreover, since the ion conductor of the present invention has a low density, a relatively light electrode layer and solid electrolyte layer can be prepared. It is preferred because the weight of a whole battery can be decreased thereby. Furthermore, when the ion conductor of the present invention is used in a solid electrolyte layer, the interface resistance between that and an electrode layer can be reduced.

Further, the above-described ion conductor is not decomposed even when it comes into contact with moisture or oxygen, and no dangerous toxic gas is generated.

The ion conductor of the present invention has an ion conductivity of preferably 1.0 to 10 mScm⁻¹, and more preferably 2.0 to 10 mScm⁻¹ at 25°C.

### 2. Method for producing ion conductor

According to another embodiment of the present invention, a method for producing an ion conductor containing LiCB₉H₁₀ and LiCB₁₁H₁₂, the method including: a solution making step for mixing LiCB₉H₁₀ and LiCB₁₁H₁₂ with each other in a solvent at a LiCB₉H₁₀/LiCB₁₁H₁₂ molar ratio of from 1.1 to 20 to prepare a homogeneous solution; a drying step for removing the solvent from the homogeneous solution to obtain a precursor; and a heat treatment step for heat-treating the precursor to obtain an ion conductor, is provided.

In the present invention, a "homogeneous solution" is defined as a solution which contains at least lithium (Li), carbon (C), boron (B) and hydrogen (H) in a solvent, wherein no undissolved substance is precipitated, and wherein raw materials are in a state where they are dissolved in the solvent.

As LiCB₉H₁₀ and LiCB₁₁H₁₂ as raw materials, usually commercially available products can be used. Further, the purity thereof is preferably 95% or more, and more preferably 98% or more. By using compounds having a purity within the above-described range, a desired crystal tends to be easily obtained.

Regarding the mixing ratio between LiCB₉H₁₀ and LiCB₁₁H₁₂, the LiCB₉H₁₀/LiCB₁₁H₁₂ molar ratio is required to be 1.1 or more. LiCB₉H₁₀/LiCB₁₁H₁₂ is preferably 1.1 to 20, more preferably 1.25 to 10, and particularly preferably 1.5 to 9. As described above, in the above-described range, the value of ion conductivity is particularly high.

LiCB₉H₁₀ and LiCB₁₁H₁₂ can be mixed with each other in a homogeneous solvent in the atmosphere.

Regarding the method for mixing, it can be carried out in a solvent. The solvent is not particularly limited, and examples thereof include water, a nitrile-based solvent such as acetonitrile, an ether-based solvent such as tetrahydrofuran and diethyl ether, N,N-dimethylformamide, N,N-dimethylacetamide, an alcohol-based solvent such as methanol and ethanol, acetone, ethyl acetate, methyl acetate, toluene, methylene chloride and chloroform. Among these solvents, water is particularly preferred in terms of safety.

The time for mixing in the solvent varies depending on the mixing method, but in the case of stirring and mixing in the solvent, the mixing time is preferably 5 minutes to 48 hours, and more preferably 5 minutes to 1 hour.

The pressure in the solution making step is usually 0.1 Pa to 2 MPa as an absolute pressure. The pressure is preferably 101 kPa to 1 MPa.

The solution making step is preferably carried out under inert gas atmosphere or sufficiently dry atmosphere. The inert gas is not particularly limited, but argon is particularly preferred.

The drying temperature for the solvent in the drying step is usually 50 to 300°C, preferably 50 to 260°C, and more preferably 150 to 220°C.

The drying time for the solvent in the drying step slightly varies depending on the type of the solvent and the drying temperature, but the solvent can be sufficiently removed by drying for 1 to 24 hours. The drying time for the solvent is more preferably 10 to 14 hours. Note that by removing the solvent under reduced pressure as in the case of vacuum drying, and by flowing an inert gas such as nitrogen and argon in which the moisture content is sufficiently low, the temperature at the time of removing the solvent can be lowered and the required time can be shortened. Note that the heat treatment step as the subsequent stage and the drying step can be carried out simultaneously.

The decompressed condition for the solvent in the drying step is usually 10⁻¹ Pa or less, and preferably 5×10⁻⁴ Pa or less.

In the heat treatment step, the precursor obtained in the drying step is heat-treated to obtain an ion conductor.

The heating temperature is preferably 150 to 260°C, and more preferably 180 to 220°C. When the temperature is lower than the above-described range, desired crystals are not easily generated, and when the temperature is higher than the above-described range, crystals other than those desired may be generated.

The heating time slightly varies depending on the heating temperature, but usually, crystallization can be sufficiently performed when the heating time is 1 to 24 hours. It is not preferred that heating is carried out at a high temperature for a long period of time which exceeds the above-described range because there is concern for change in quality of the ion conductor. The heating time is more preferably 10 to 14 hours.

Heating can be performed under vacuum to 1 MPa or inert gas atmosphere, but is preferably performed under vacuum. As the inert gas, nitrogen, helium, argon or the like can be used, and among them, argon is preferred. In the present invention, the heat treatment can be performed, for example, under 1 MPa argon atmosphere instead of under vacuum. The contents of oxygen and moisture are preferably low.

In Raman spectroscopy, the ion conductor obtained by the production method of the present invention preferably has peaks respectively at 749 cm⁻¹ (±5 cm⁻¹) that is based on LiCB₉H₁₀ and 763 cm⁻¹ (±5 cm⁻¹) that is based on LiCB₁₁H₁₂. Further, the ion conductor has X-ray diffraction peaks that are based on the high-temperature phase of LiCB₉H₁₀ at at least 2θ=14.9±0.3 deg, 16.4±0.3 deg and 17.1±0.5 deg in X-ray diffraction at 25°C, and the intensity ratio (B/A) calculated according to A=(X-ray diffraction intensity of 16.4±0.3 deg)-(X-ray diffraction intensity of 20 deg) and B=(X-ray diffraction intensity of 17.1±0.5 deg)-(X-ray diffraction intensity of 20 deg) is preferably 1 to 20, more preferably 1.0 to 15, and particularly preferably 1.0 to 10.

### 3. All-solid-state battery

The ion conductor of the present invention can be used as a solid electrolyte for all-solid-state batteries. Accordingly, according to one embodiment of the present invention, a solid electrolyte for all-solid-state batteries comprising the above-described ion conductor is provided. Further, according to another embodiment of the present invention, an all-solid-state battery, which is obtained by using the above-described solid electrolyte for all-solid-state batteries, is provided.

In this specification, the all-solid-state battery is an all-solid-state battery in which lithium ions perform electrical conduction, and particularly an all-solid-state lithium ion secondary battery. The all-solid-state battery has a structure in which a solid electrolyte layer is disposed between a positive electrode layer and a negative electrode layer. The ion conductor of the present invention may be contained as the solid electrolyte in at least one of the positive electrode layer, negative electrode layer and solid electrolyte layer. When used in an electrode layer, use in the negative electrode layer is more preferred compared to use in the positive electrode layer. This is because a side reaction is less likely to be caused in the negative electrode layer compared to the positive electrode layer. When the ion conductor of the present invention is contained in the positive electrode layer or negative electrode layer, the ion conductor is used in combination with a publicly-known positive electrode active material or negative electrode active material for lithium ion secondary batteries. As the negative electrode layer, a bulk type in which an active material and a solid electrolyte are mixed together is preferably used because the capacity per single cell is larger.

The all-solid-state battery is prepared by forming and laminating the above-described layers, and the forming method and laminating method for the respective layers are not particularly limited. Examples thereof include: a method in which a solid electrolyte and/or an electrode active material are dispersed in a solvent to provide a slurry-like mixture, which is applied by a doctor blade, spin coating or the like and subjected to rolling to form a film; a gas phase method in which film forming and lamination are performed by using a vacuum deposition method, ion plating method, sputtering method, laser ablation method or the like; and a pressing method in which powder is formed by hot pressing or cold pressing (not heating) and laminated. Since the ion conductor of the present invention is relatively soft, it is particularly preferred to prepare a battery by forming by pressing and lamination. Further, it is also possible to employ a method in which: an electrode layer containing an active material, a conduction assisting agent and a binder is formed in advance; into which a solution obtained by dissolving a solid electrolyte in a solvent or a slurry obtained by dispersing a solid electrolyte in a solvent is flowed; and after that, the solvent is removed, thereby putting the solid electrolyte in the electrode layer.

Regarding the atmosphere for preparing the all-solid-state battery, the preparation is preferably carried out in an inert gas in which the moisture content is controlled or in a dry room. Regarding the control of the moisture content, the dew point is -10°C to -100°C, more preferably -20°C to -80°C, and particularly preferably -30°C to -75°C. This is for preventing reduction in ion conductivity due to the formation of a hydrate, though the hydrolysis rate of the ion conductor of the present invention is very low.

### EXAMPLES

Hereinafter, the present invention will be more specifically described by way of examples, but the content of the present invention is not limited thereby.

### <Preparation of ion conductor>

### (Example 1)

In a glovebox under argon atmosphere, 240 mg of LiCB₉H₁₀ (manufactured by Katchem) and 122.2 mg of LiCB₁₁H₁₂ (manufactured by Katchem) were weighed so that the molar ratio of LiCB₉H₁₀:LiCB₁₁H₁₂ became 7:3. Next, to the mixed powder of LiCB₉H₁₀ and LiCB₁₁H₁₂ previously weighed, 10 mL of pure water (Water, Reagent, Alfa Aesar) was added to dissolve it, and stirring was carried out for 30 minutes using a stirrer. Using a glass tube oven, the obtained homogeneous solution was dried under a decompressed condition of 0.1 Pa or less at 150°C for 12 hours to remove pure water, thereby obtaining a dry white powder (precursor). The obtained white powder was kneaded in a mortar for 15 minutes and 50 mg thereof was pelletized under 240 MPa, and it was subjected to vacuum heat treatment at 200°C for 12 hours using a turbopump. The obtained ion conductor was subjected to AC impedance measurement to measure the ion conductivity. X-ray diffraction was carried out, and it was recognized that the high-temperature phase of LiCB₉H₁₀ in the obtained ion conductor was stabilized. In the DTA measurement, phase transition was not observed. The Raman spectrum was the same as that of the product produced by milling synthesis.

### (Comparative Example 1)

An ion conductor was produced in a manner similar to that in Example 1, except that the raw materials were used in a manner such that the molar ratio of LiCB₉H₁₀:LiCB₁₁H₁₂ became 5:5.

### <X-ray diffraction measurement>

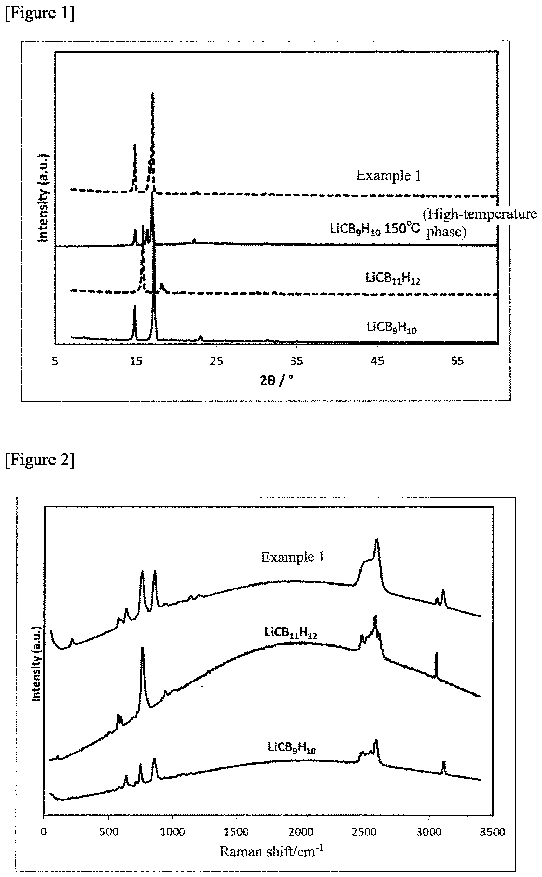

The powder of the ion conductor obtained in Example 1 was subjected to the X-ray diffraction measurement (X'pert Pro manufactured by PANalytical, CuKα: λ=1.5405 Å) under argon atmosphere at room temperature (25°C) using a Lindemann glass capillary (outer diameter: 0.5 mm, thickness: 0.01 mm). The obtained X-ray diffraction peaks are shown in Figure 1. For comparison, X-ray diffraction peaks of LiCB₉H₁₀ and LiCB₁₁H₁₂ as the raw materials and LiCB₉H₁₀ (high-temperature phase of 150°C) are also shown in Figure 1.

In Example 1, X-ray diffraction peaks were observed at at least 2θ=14.9±0.3 deg, 16.4±0.3 deg and 17.1±0.5 deg. Further, the intensities at peak positions of 16.44 deg and 17.07 deg that are peak positions of the high-temperature phase of LiCB₉H₁₀ were regarded as A and B, respectively. Note that the value of 2θ=20 deg was regarded as the baseline and the respective intensities were calculated according to A=(X-ray diffraction intensity of 16.44 deg)-(X-ray diffraction intensity of 20 deg) and B=(X-ray diffraction intensity of 17.07 deg)-(X-ray diffraction intensity of 20 deg).

It is understood that the ion conductor of Example 1 is a solid solution since the peak positions thereof correspond to those of the high-temperature phase of LiCB₉H₁₀.

### <Raman spectroscopy>

### (1) Preparation of sample

A sample to be measured was prepared by using an airtight container having quartz glass (Φ: 60 mm, thickness: 1 mm) at the upper portion as an optical window. In a glovebox under argon atmosphere, a liquid was retained in the sample in a state where it was in contact with the quartz glass, then the container was sealed and taken out from the glovebox, and Raman spectroscopy was carried out.

### (2) Measurement conditions

Using Laser Raman Spectrometer NRS-5100 (manufactured by JASCO Corporation), the measurement was carried out at an excitation wavelength of 532.15 nm for an exposure time of 5 seconds. The obtained Raman spectra are shown in Figure 2.

LiCB₉H₁₀ has a peak at 749 cm⁻¹ and LiCB₁₁H₁₂ has a peak at 763 cm⁻¹. Note that the Raman shift value is derived from bonding and hardly influenced by the crystal condition. It is understood that in Example 1, the peak at 763 cm⁻¹ is a shoulder peak of 749 cm⁻¹.

### <Ion conductivity measurement>

In a glovebox under argon atmosphere, each of the ion conductor obtained in Example 1 and LiCB₉H₁₀ and LiCB₁₁H₁₂ as the raw materials was subjected to uniaxial molding (240 MPa) to produce a disk having a thickness of about 1 mm and ϕ of 8 mm. The AC impedance was measured by the two-terminal method utilizing a lithium electrode, wherein the temperature was increased/decreased at 10°C intervals in a temperature range of room temperature to 150°C or 80°C (HIOKI 3532-80, chemical impedance meter), and the ion conductivity was calculated. The measurement frequency range was 4 Hz to 1 MHz, and the amplitude was 100 mV.

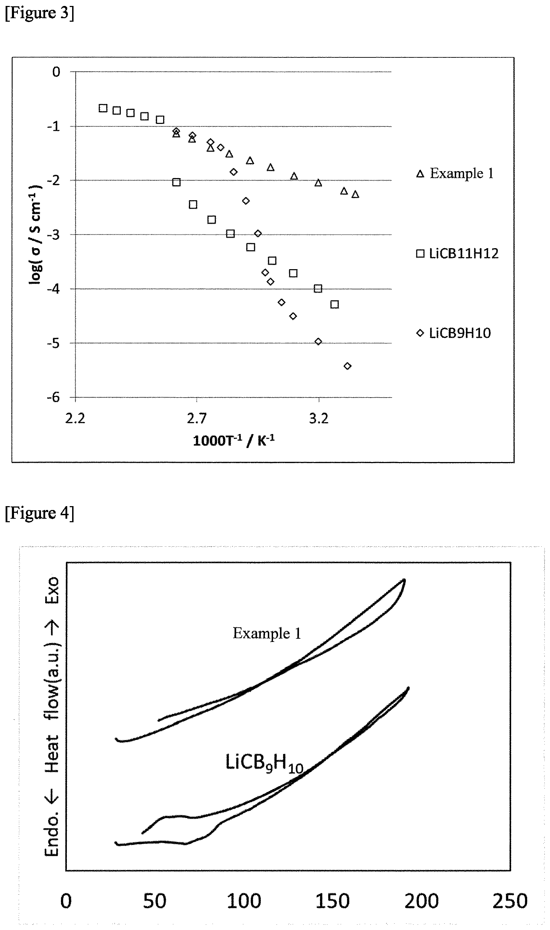

The results of the measurement of the ion conductivity are shown in Figure 3. Further, the ion conductivity and activation energy at room temperature (25°C) are shown in Table 1. Note that in Example 1, the phenomenon of sharp reduction in ion conductivity at low temperatures, which was observed in the cases of LiCB₉H₁₀ and LiCB₁₁H₁₂ as the raw materials, was not observed. Further, the ion conductivity of the ion conductor obtained in Comparative Example 1 is shown in Table 1.

**Table 1: Ion conductivity and activation energy at 25°C**

| | Example 1 | Comparative Example 1 |
|---|---|---|
| Ion conductivity/mScm⁻¹ | 5.6 | 0.8 |
| Activation energy/kJmol⁻¹ | 28.8 | - |

### <Differential calorie DTA measurement>

The powder of the ion conductor obtained in Example 1 was subjected to the differential calorie DTA measurement under argon atmosphere at a temperature raising/lowering rate of 5°C/min in a temperature range of room temperature to 200°C using a differential calorie measurement DTA apparatus (Rigaku Thermo Plus TG-8120 system). Note that in Example 1, phase transition observed in the cases of LiCB₉H₁₀ and LiCB₁₁H₁₂ as the raw materials was not observed.

## Claims

1. A method for producing an ion conductor comprising LiCB₉H₁₀ and LiCB₁₁H₁₂, the method including:
a solution making step for mixing LiCB₉H₁₀ and LiCB₁₁H₁₂ with each other in a solvent at a LiCB₉H₁₀/LiCB₁₁H₁₂ molar ratio of from 1.1 to 20 to prepare a homogeneous solution;
a drying step for removing the solvent from the homogeneous solution to obtain a precursor; and
a heat treatment step for heat-treating the precursor to obtain an ion conductor.

2. The method according to claim 1, wherein the solvent in the solution making step is at least one selected from the group consisting of water, tetrahydrofuran, acetonitrile, acetone, ethyl acetate, methyl acetate, toluene, methylene chloride and chloroform.

3. The method according to claim 1, wherein the solvent in the solution making step consists of water.

4. The method according to any one of claims 1 to 3, wherein the stirring and mixing time in the solution making step is 5 minutes to 48 hours.

5. The method according to any one of claims 1 to 4, wherein the molar ratio between LiCB₉H₁₀ and LiCB₁₁H₁₂ (LiCB₉H₁₀/LiCB₁₁H₁₂) in the solution making step is from 1.5 to 9.

6. The method according to any one of claims 1 to 5, wherein the temperature in the drying step is 50 to 260°C.

7. The method according to any one of claims 1 to 6, wherein the drying time in the drying step is 1 to 24 hours.

8. The method according to any one of claims 1 to 7, wherein the temperature in the heat treatment step is 150 to 260°C.

9. The method according to any one of claims 1 to 8, wherein the heating time in the heat treatment step is 1 to 24 hours.

10. The method according to any one of claims 1 to 9, wherein the obtained ion conductor has a single-phase crystal structure of a high-temperature phase of LiCB₉H₁₀.

11. The method according to any one of claims 1 to 10, wherein the obtained ion conductor has X-ray diffraction peaks at at least 2θ=14.9±0.3 deg, 16.4±0.3 deg and 17.1±0.5 deg in X-ray diffraction at 25°C, and wherein the intensity ratio (B/A) calculated according to A=(X-ray diffraction intensity of 16.4±0.3 deg)-(X-ray diffraction intensity of 20 deg) and B=(X-ray diffraction intensity of 17.1±0.5 deg)-(X-ray diffraction intensity of 20 deg) is 1.0 to 20.

12. The method according to any one of claims 1 to 11, wherein the obtained ion conductor has an ion conductivity of 1.0 to 10 mScm⁻¹ at 25°C.

13. An ion conductor obtained by the method according to any one of claims 1 to 12.

14. An electrode obtained by using the ion conductor according to claim 13.

15. An all-solid-state battery obtained by using the ion conductor according to claim 13.
